# EUROPÄISCHE PATENTANMELDUNG

(11) **EP 4 474 339 A1**
(43) Veröffentlichungstag der Anmeldung: **11.12.2024**
(21) Anmeldenummer: 24156028.3
(22) Anmeldetag: 06.02.2024
(51) Int. Cl.: B67C 3/00, A23L 3/04, B67C 3/02, A23L 3/00, B65G 43/08

(54) **VERFAHREN ZUM REGELN EINER GESCHWINDIGKEIT EINES TRANSPORTBANDS EINER BEHÄLTERBEHANDLUNGSMASCHINE UND VORRICHTUNG ZUM AUSFÜHREN DES VERFAHRENS**

(30) Priorität: 06.06.2023 DE 102023114814
(71) Anmelder: Krones AG, 93073 Neutraubling (DE)
(72) Erfinder: Kaatz, Stefan, 93073 Neutraubling (DE); Schmuck, Jesse, 93073 Neutraubling (DE)
(74) Vertreter: Grünecker Patent- und Rechtsanwälte PartG mbB

(57) **Zusammenfassung**

Die Erfindung betrifft ein Verfahren zum Regeln einer Geschwindigkeit eines Transportbands (23) einer Behälterbehandlungsmaschine (24), wie ein Pasteur, in einer Abfülllinie (22) mit mehreren Maschinen (25, 26), wobei das Verfahren umfasst: Überwachen einer aktuellen Leistung der Abfülllinie (22); beim Feststellen, dass die aktuelle Leistung eine vorgegebene Nennleistung unterschreitet, Betreiben des Transportbands (23) mit einer effektiven Geschwindigkeit (5, 9, 13, 17, 21) durch ein getaktetes Betreiben des Transportbands (23) mit einer Nenngeschwindigkeit (v_Nenn) für eine erste Zeitdauer (3, 7, 11, 16, 20) und mit Stoppen des Transportbands (23) für eine zweite Zeitdauer (4, 8, 12, 15, 19). Weiter betrifft die Erfindung eine Vorrichtung zum Ausführen des Verfahrens, wobei die Vorrichtung eine Behälterbehandlungsmaschine (24) mit einem Transportband (23) umfasst.

## Beschreibung

Die Erfindung betrifft ein Verfahren zum Regeln einer Geschwindigkeit eines Transportbands einer Behälterbehandlungsmaschine und eine Vorrichtung zum Ausführen des Verfahrens gemäß den unabhängigen Ansprüchen.

### Stand der Technik

Es ist bekannt, bei einer geänderten Leistung in einer Linie für ein gleichbleibendes Pasteurisationsergebnis (=PEs) die Bandgeschwindigkeit anzupassen. Beispielsweise kann der Pasteur vorübergehend gestoppt werden, wenn es am Einlauf einen Mangel an Behältern oder einen Rückstau von Behältern am Auslauf nach dem Pasteur gibt. Bei dauerhaft reduzierter Leistung durch eine Serie von Störungen an einer in der Linie nachgelagerten Maschine oder durch eine, durch Eingriff in den Füllprozess, reduziere Ausbringung am Füller, führt dies zu einem Stop-and-Go am Pasteur. Das reale Stop-and-Go Verhalten kann im Wesentlichen durch die Positionierung von Stauschaltern auf den Transportanlagen in der Linie, dem verfügbaren Puffer und der eingestellten Dynamik von Beschleunigung und Verzögerung von den Maschinen vor und nach dem Pasteur bestimmt werden. Ein komplexes Zusammenspiel aller Maschinen ist hierbei zu beobachten.

Das Betreiben des Pasteurs im Stop-and-Go Betrieb kann bei den Maschinen mit einer PE-Regelung zur Kühlung und Heizung der Maschine führen, also zu einem Mehrverbrauch an Energie. Ursächlich dafür kann der Eingriff in die Temperaturen der Pasteurisationszonen mit dem Ziel sein, das Pasteurisationsergebnis trotz des Stillstandes zu begrenzen. Tatsächlich kann sich das das Pasteurisationsergebnis aber zwangsläufig nach oben verschlechtern (mehr PEs als im unterbrechungsfreien Durchlauf). Darüber hinaus kann sich die Zeit in den Pasteurisationszonen verlängern, was zu einer Pasteurisation bei niedrigeren Temperaturen führen kann und in Bezug auf die effektive Durchwärmung und Pasteurisation des Produktes mikrobiologisch kritisch gesehen werden kann.

### Aufgabe

Die Aufgabe der Erfindung ist es, ein Verfahren zum Regeln einer Geschwindigkeit eines Transportbands einer Behälterbehandlungsmaschine und eine Vorrichtung zum Ausführen des Verfahrens zur Verfügung zu stellen, die energieeffizient sind und das Einhalten einer vorgegebenen Behälterbehandlung ermöglichen können.

### Lösung

Die Aufgabe wird gelöst durch das Verfahren zum Regeln einer Geschwindigkeit eines Transportbands einer Behälterbehandlungsmaschine und die Vorrichtung zum Ausführen des Verfahrens gemäß den unabhängigen Ansprüchen. Weitere Ausführungsformen sind in den Unteransprüchen offenbart.

Das erfindungsgemäße Verfahren zum Regeln einer Geschwindigkeit eines Transportbands einer Behälterbehandlungsmaschine, wie ein Pasteur, in einer Abfülllinie mit mehreren Maschinen, umfasst ein Überwachen einer aktuellen Leistung der Abfülllinie und beim Feststellen, dass die aktuelle Leistung eine vorgegebene Nennleistung unterschreitet, ein Betreiben des Transportbands mit einer effektiven Geschwindigkeit durch ein getaktetes Betreiben des Transportbands mit einer Nenngeschwindigkeit für eine erste Zeitdauer und mit Stoppen des Transportbands für eine zweite Zeitdauer.

Die effektive Geschwindigkeit ist kleiner als die Nenngeschwindigkeit und größer als Null.

Für das Betreiben des Transportbands mit der effektiven Geschwindigkeit kann die Taktung durch Einstellen der ersten Zeitdauer und/oder der zweiten Zeitdauer geändert bzw. angepasst werden.

Durch die effektive Geschwindigkeit bei einer aktuellen Leistung der Abfülllinie, die eine vorgegebene Nennleistung unterschreitet, können sich Temperaturen von Behandlungsmedien in der Behälterbehandlungsmaschine ändern. Beispielsweise können sich bei einem Pasteur die Pasteurisationstemperaturen ändern.

In der Behälterbehandlungsmaschine kann vorgesehen sein, eine Behandlung von Behältern durchzuführen, wenn das Transportband mit der Nenngeschwindigkeit betrieben wird, und keine Behandlung von Behältern durchzuführen, wenn das Transportband gestoppt ist. Mit einer Behandlung kann eine aktive Behandlung gemeint sein, die beispielsweise ein Aufbringen von Behandlungsmedium auf die Behälter umfassen kann.

Das Betreiben mit der effektiven Geschwindigkeit kann das beschriebene getaktete Betreiben bedeuten. Also ein zeitlich festgelegter Wechsel zwischen Betreiben des Transportbands mit der Nenngeschwindigkeit und mit Stoppen des Transportbands.

Durch das Betreiben der Behälterbehandlungsmaschine mit der effektiven Geschwindigkeit kann Energie eingespart werden, da auf ein aktives Heizen und/oder Kühlen von Behandlungsmedium der Behälterbehandlungsmaschine verzichtet werden kann.

Die erste Zeitdauer kann gleich einer ersten minimalen Zeitdauer oder länger als eine erste minimale Zeitdauer sein. Die erste minimale Zeitdauer kann sich durch physikalische Vorgaben und/oder Bedingungen ergeben, die sich beispielsweise für ein Anfahren mit der Nenngeschwindigkeit aus einem Stopp des Transportbands ergeben können. Die erste minimale Zeitdauer kann 5 Sekunden, 10 Sekunden oder 15 Sekunden betragen.

Die zweite Zeitdauer kann gleich einer zweiten minimalen Zeitdauer oder länger als eine zweite minimale Zeitdauer sein. Die zweite minimale Zeitdauer kann sich durch physikalische Vorgaben und/oder Bedingungen ergeben, die sich beispielsweise für ein Stoppen des Transportbands aus der Nenngeschwindigkeit ergeben können. Die zweite minimale Zeitdauer kann 5 Sekunden, 10 Sekunden oder 15 Sekunden betragen.

Um eine gewünschte effektive Geschwindigkeit zu erreichen, kann die zweite Zeitdauer zunächst immer gleich der zweiten minimalen Zeitdauer gesetzt werden. So kann die Zeitdauer des Stoppens des Transportbands möglichst kurz sein. Und die erste Zeitdauer kann größer als die erste minimale Zeitdauer sein. So kann die Zeitdauer, in der das Transportband mit Nenngeschwindigkeit betrieben wird, möglichst lang sein.

Wenn die erste minimale Zeitdauer und die zweite minimale Zeitdauer gleich lang sind, kann beim getakteten Betreiben des Transportbands mit der Nenngeschwindigkeit für die erste minimale Zeitdauer und mit Stoppen des Transportbands für die zweite minimale Zeitdauer, eine effektive Geschwindigkeit von 50% der Nenngeschwindigkeit erreicht werden. Für eine kleinere effektive Geschwindigkeit, also kleiner als 50% der Nenngeschwindigkeit, kann beim getakteten Betreiben des Transportbands mit der Nenngeschwindigkeit die erste minimale Zeitdauer beibehalten und die zweite Zeitdauer für den Stillstand des Transportbands erhöht werden.

Wenn die erste minimale Zeitdauer viermal so lang wie die zweite minimale Zeitdauer ist, kann beim getakteten Betreiben des Transportbands mit der Nenngeschwindigkeit für die erste minimale Zeitdauer und mit Stoppen des Transportbands für die zweite minimale Zeitdauer, eine effektive Geschwindigkeit von 75% der Nenngeschwindigkeit erreicht werden. Für eine kleinere effektive Geschwindigkeit, also kleiner als 75% der Nenngeschwindigkeit, kann beim getakteten Betreiben des Transportbands mit der Nenngeschwindigkeit die erste minimale Zeitdauer beibehalten und die zweite Zeitdauer für den Stillstand des Transportbands erhöht werden.

Die erste Zeitdauer und/oder die zweite Zeitdauer können gleich oder mehr als 5 Sekunden, gleich oder mehr als 10 Sekunden oder gleich oder mehr als 15 Sekunden sein. Beispielsweise kann die Nenngeschwindigkeit 2 Meter pro Sekunde sein.

Das Verfahren kann weiter ein Absenken einer Temperatur in mindestens einer Behandlungszone, die von der Behälterbehandlungsmaschine umfasst wird, umfassen wobei die mindestens eine Behandlungszone eine erste und/oder eine letzte Behandlungszone sein kann. Beispielsweise kann das Absenken der Temperatur durch eine Zufuhr von Behandlungsmedium in die mindestens eine Behandlungszone erfolgen.

Zudem oder alternativ kann ein Absenken einer Temperatur in mindestens einer Behandlungszone, die von der Behälterbehandlungsmaschine umfasst wird, basierend auf der effektiven Geschwindigkeit erfolgen. Das Absenken der Temperatur basiert somit nicht direkt auf dem Wechsel zwischen Nenngeschwindigkeit und Stillstand des Transportbands, sondern auf der sich aus der Taktung ergebenden effektiven Geschwindigkeit.

Beim getakteten Betreiben des Transportbands mit der Nenngeschwindigkeit für die erste minimale Zeitdauer und mit Stoppen des Transportbands für die zweite minimale Zeitdauer, wenn die erste minimale Zeitdauer und die zweite minimale Zeitdauer gleich lang sind, kann eine effektive Geschwindigkeit von 50% der Nenngeschwindigkeit erreicht werden.

Beim getakteten Betreiben des Transportbands mit der Nenngeschwindigkeit für die erste minimale Zeitdauer und mit Stoppen des Transportbands für die zweite minimale Zeitdauer, wenn die erste minimale Zeitdauer viermal so lang wie die zweite minimale Zeitdauer ist, kann eine effektive Geschwindigkeit von 75% der Nenngeschwindigkeit erreicht werden.

Weiter ist eine Vorrichtung zum Ausführen des Verfahrens, wie oben oder weiter unten beschrieben, vorgesehen, wobei die Vorrichtung eine Behälterbehandlungsmaschine mit einem Transportband umfasst. Die Behälterbehandlungsmaschine kann ein Pasteur sein, die beispielsweise in einer Abfülllinie mit mehreren Maschinen angeordnet ist. Eine Sensorik und/oder Regelungsvorrichtung zum Überwachen einer aktuellen Leistung der Abfülllinie kann von der Vorrichtung umfasst sein. Auf einem computerlesbaren Medium gespeicherte Instruktionen, die beim Ausführen durch einen Prozessor, der von der Vorrichtung umfasst sein kann, die Vorrichtung veranlassen, das Verfahren auszuführen, können der Vorrichtung zugänglich sein und/oder von der Vorrichtung umfasst sein.

Das Transportband kann regelbar sein, um getaktet mit einer Nenngeschwindigkeit für eine erste Zeitdauer und mit Stoppen des Transportbands für eine zweite Zeitdauer betrieben zu werden.

Die Behälterbehandlungsmaschine kann mindestens eine Behandlungszone umfassen, deren Temperatur regelbar sein kann.

Die mindestens eine Behandlungszone kann eine Zuführleitung für eine Zufuhr von Behandlungsmedium umfassen.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 ein Diagramm für ein Betreiben eines Transportbands zum Erreichen von 100% Nenngeschwindigkeit,
Figur 2 ein Diagramm für ein getaktetes Betreiben des Transportbands zum Erreichen einer effektiven Geschwindigkeit von 90% Nenngeschwindigkeit,
Figur 3 ein Diagramm für ein getaktetes Betreiben des Transportbands zum Erreichen einer effektiven Geschwindigkeit von 70% Nenngeschwindigkeit,
Figur 4 ein Diagramm für ein getaktetes Betreiben des Transportbands zum Erreichen einer effektiven Geschwindigkeit von 50% Nenngeschwindigkeit,
Figur 5 ein Diagramm für ein getaktetes Betreiben des Transportbands zum Erreichen einer effektiven Geschwindigkeit von 20% Nenngeschwindigkeit,
Figur 6 ein Diagramm für ein getaktetes Betreiben des Transportbands zum Erreichen einer effektiven Geschwindigkeit von 10% Nenngeschwindigkeit und
Figur 7 eine schematische Abfülllinie, in der das Verfahren zum Regeln einer Geschwindigkeit eines Transportbands einer Behälterbehandlungsmaschine durchführbar ist.

### Ausführliche Figurenbeschreibung

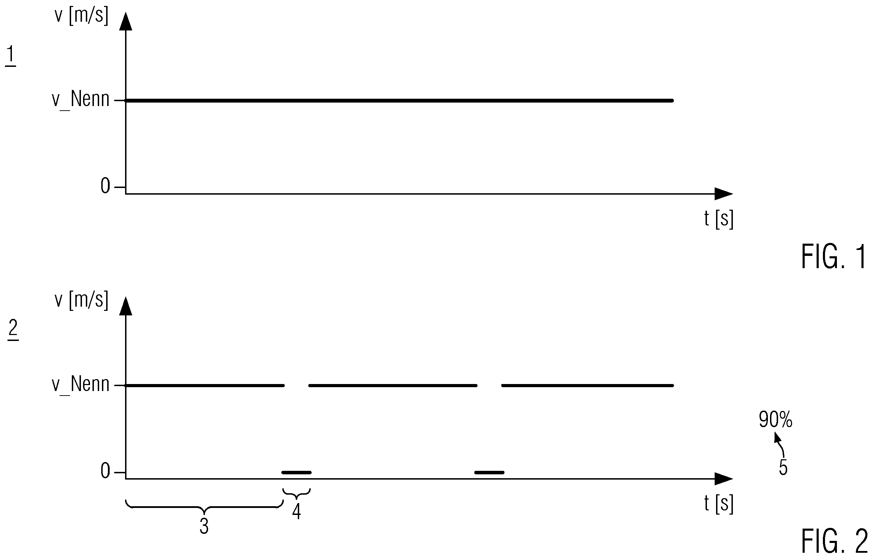

Die Figur 1 zeigt ein Diagramm 1 für ein Betreiben eines Transportbands zum Erreichen von 100% Nenngeschwindigkeit. Die Geschwindigkeit v des Transportbands in Meter pro Sekunde ist über der Zeit t in Sekunden dargestellt. Das Transportband wird während der dargestellten Zeitdauer kontinuierlich mit der Nenngeschwindigkeit v_Nenn betrieben.

Die Figur 2 zeigt ein Diagramm 2 für ein getaktetes Betreiben des Transportbands zum Erreichen einer effektiven Geschwindigkeit 5 von 90% Nenngeschwindigkeit. Die Geschwindigkeit v des Transportbands in Meter pro Sekunde ist über der Zeit t in Sekunden dargestellt. Das Transportband wird während der dargestellten Zeitdauer getaktet für eine erste Zeitdauer 3 mit der Nenngeschwindigkeit v_Nenn betrieben und für eine zweite Zeitdauer 4 gestoppt. Die zweite Zeitdauer 4 entspricht der minimalen zweiten Zeitdauer. Die erste Zeitdauer 3 ist länger als eine minimale erste Zeitdauer. Durch die dargestellte Taktung kann die effektive Geschwindigkeit 5 von 90% Nenngeschwindigkeit erreicht werden.

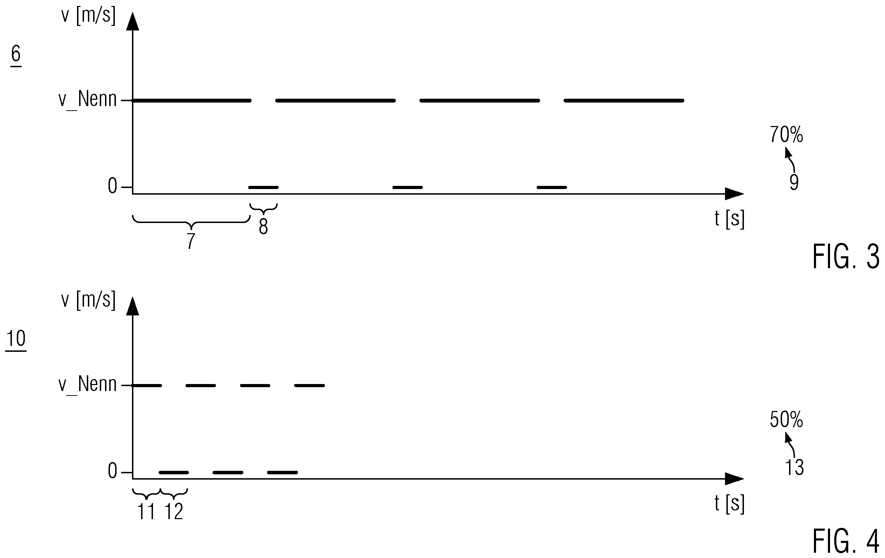

Die Figur 3 zeigt ein Diagramm für ein getaktetes Betreiben des Transportbands zum Erreichen einer effektiven Geschwindigkeit 9 von 70% Nenngeschwindigkeit. Die Geschwindigkeit v des

Transportbands in Meter pro Sekunde ist über der Zeit t in Sekunden dargestellt. Das Transportband wird während der dargestellten Zeitdauer getaktet für eine erste Zeitdauer 7 mit der Nenngeschwindigkeit v_Nenn betrieben und für eine zweite Zeitdauer 8 gestoppt. Die zweite Zeitdauer 8 entspricht der minimalen zweiten Zeitdauer. Die erste Zeitdauer 7 ist länger als die minimale erste Zeitdauer. Die erste Zeitdauer 7 der Figur 3 ist zudem kürzer als die erste Zeitdauer der Figur 2. Durch die dargestellte Taktung kann die effektive Geschwindigkeit 9 von 70% Nenngeschwindigkeit erreicht werden.

Die Figur 4 zeigt ein Diagramm für ein getaktetes Betreiben des Transportbands zum Erreichen einer effektiven Geschwindigkeit 13 von 50% Nenngeschwindigkeit. Die Geschwindigkeit v des Transportbands in Meter pro Sekunde ist über der Zeit t in Sekunden dargestellt. Das Transportband wird während der dargestellten Zeitdauer getaktet für eine erste Zeitdauer 11 mit der Nenngeschwindigkeit v_Nenn betrieben und für eine zweite Zeitdauer 12 gestoppt. Die erste Zeitdauer 11 entspricht der minimalen ersten Zeitdauer, und die zweite Zeitdauer 12 entspricht der minimalen zweiten Zeitdauer. Die minimale erste Zeitdauer und die minimale zweite Zeitdauer sind in der Darstellung gleich lang, sodass durch die dargestellte Taktung die effektive Geschwindigkeit 13 von 50% Nenngeschwindigkeit erreicht werden kann.

Um nun die effektive Geschwindigkeit weiter reduzieren zu können (auf weniger als 50% Nenngeschwindigkeit), wird für die erste Zeitdauer die minimale erste Zeitdauer beibehalten und die zweite Zeitdauer wird größer als die minimale zweite Zeitdauer gewählt.

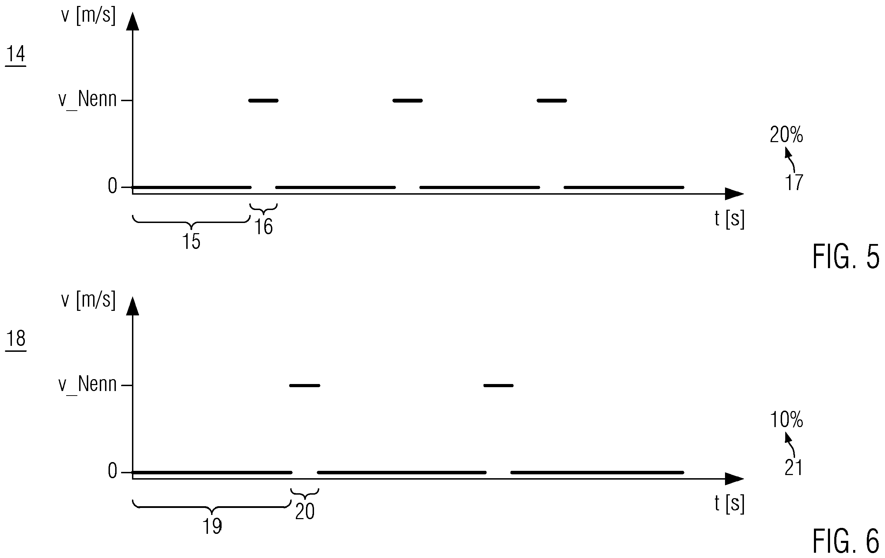

Die Figur 5 zeigt ein Diagramm für ein getaktetes Betreiben des Transportbands zum Erreichen einer effektiven Geschwindigkeit 17 von 20% Nenngeschwindigkeit. Die Geschwindigkeit v des Transportbands in Meter pro Sekunde ist über der Zeit t in Sekunden dargestellt. Das Transportband wird während der dargestellten Zeitdauer getaktet für eine erste Zeitdauer 16 mit der Nenngeschwindigkeit v_Nenn betrieben und für eine zweite Zeitdauer 15 gestoppt. Die erste Zeitdauer 16 entspricht der minimalen ersten Zeitdauer. Die zweite Zeitdauer 15 ist länger als die minimale zweite Zeitdauer. Durch die dargestellte Taktung kann die effektive Geschwindigkeit 17 von 20% Nenngeschwindigkeit erreicht werden.

Die Figur 6 zeigt ein Diagramm für ein getaktetes Betreiben des Transportbands zum Erreichen einer effektiven Geschwindigkeit 21 von 10% Nenngeschwindigkeit. Die Geschwindigkeit v des Transportbands in Meter pro Sekunde ist über der Zeit t in Sekunden dargestellt. Das Transportband wird während der dargestellten Zeitdauer getaktet für eine erste Zeitdauer 20 mit der Nenngeschwindigkeit v_Nenn betrieben und für eine zweite Zeitdauer 19 gestoppt. Die erste Zeitdauer 20 entspricht der minimalen ersten Zeitdauer. Die zweite Zeitdauer 19 ist länger als die minimale zweite Zeitdauer. Die zweite Zeitdauer 19 der Figur 6 ist zudem länger als die zweite Zeitdauer der Figur 5. Durch die dargestellte Taktung kann die effektive Geschwindigkeit 21 von 10% Nenngeschwindigkeit erreicht werden.

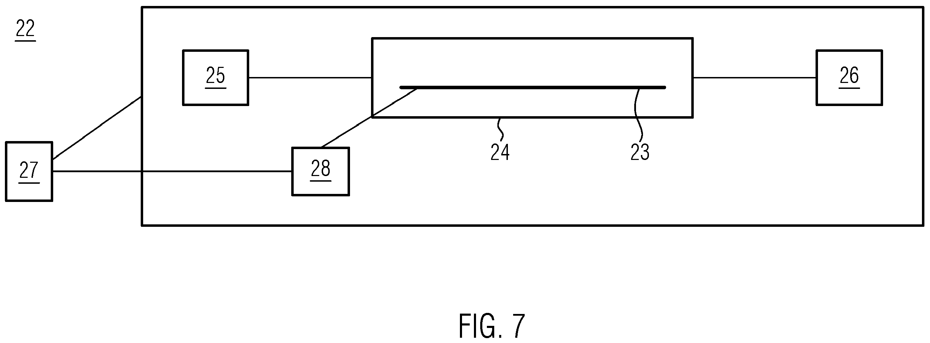

Die Figur 7 zeigt eine schematische Abfülllinie 22, in der das Verfahren zum Regeln einer Geschwindigkeit eines Transportbands 23 einer Behälterbehandlungsmaschine 24 durchführbar ist. Die Abfülllinie 22 umfasst beispielshaft eine erste Maschine 25, die der Behälterbehandlungsmaschine 24 vorgeschaltet ist, und eine zweite Maschine 26, die der Behälterbehandlungsmaschine 24 nachgeordnet ist. Die erste Maschine 25 kann ein Füller zum Abfüllen von Produkt in Behälter sein, die Behälterbehandlungsmaschine 24 kann ein Pasteur zum Pasteurisieren des in die Behälter angefüllten Produkts sein und die zweite Maschine 26 kann eine Etikettiermaschine sein.

Mittels einer Sensorik 27 kann eine aktuelle Leistung der Abfülllinie 22 überwacht werden. Beim Feststellen, dass die aktuelle Leistung eine vorgegebene Nennleistung unterschreitet, kann ein Betreiben des Transportbands 23 mit einer effektiven Geschwindigkeit durch ein getaktetes Betreiben des Transportbands 23 mit einer Nenngeschwindigkeit für eine erste Zeitdauer und mit Stoppen des Transportbands 23 für eine zweite Zeitdauer erfolgen. Dies kann mittels einer Regelungsvorrichtung 28 erfolgen, die beispielsweise Daten der Sensorik übermittelt bekommen und/oder auf diese zugreifen kann.

Für das getaktete Betreiben können beispielsweise Taktungen, wie in den Figuren 2 bis 6 beschrieben, verwendet werden.

## Patentansprüche

1. Verfahren zum Regeln einer Geschwindigkeit eines Transportbands (23) einer Behälterbehandlungsmaschine (24), wie ein Pasteur, in einer Abfülllinie (22) mit mehreren Maschinen (25, 26), wobei das Verfahren umfasst:
- Überwachen einer aktuellen Leistung der Abfülllinie (22),
- beim Feststellen, dass die aktuelle Leistung eine vorgegebene Nennleistung unterschreitet, Betreiben des Transportbands (23) mit einer effektiven Geschwindigkeit (5, 9, 13, 17, 21) durch ein getaktetes Betreiben des Transportbands (23) mit einer Nenngeschwindigkeit (v_Nenn) für eine erste Zeitdauer (3, 7, 11, 16, 20) und mit Stoppen des Transportbands (23) für eine zweite Zeitdauer (4, 8, 12, 15, 19).

2. Das Verfahren nach Anspruch 1, wobei die erste Zeitdauer (3, 7, 11, 16, 20) gleich einer ersten minimalen Zeitdauer oder länger als eine erste minimale Zeitdauer ist.

3. Das Verfahren nach Anspruch 1 oder 2, wobei die zweite Zeitdauer (4, 8, 12, 15, 19) gleich einer zweiten minimalen Zeitdauer oder länger als eine zweite minimale Zeitdauer ist.

4. Das Verfahren nach einem der Ansprüche 1 bis 3, wobei die erste Zeitdauer (3, 7, 11, 16, 20) und/oder die zweite Zeitdauer (4, 8, 12, 15, 19) gleich oder mehr als 5 Sekunden, gleich oder mehr als 10 Sekunden oder gleich oder mehr als 15 Sekunden ist, wobei beispielsweise die Nenngeschwindigkeit (v_Nenn) 2 Meter pro Sekunde ist.

5. Das Verfahren nach einem der Ansprüche 1 bis 4, weiter umfassend ein Absenken einer Temperatur in mindestens einer Behandlungszone, die von der Behälterbehandlungsmaschine (24) umfasst wird, wobei die mindestens eine Behandlungszone eine erste und/oder eine letzte Behandlungszone ist, wobei beispielsweise das Absenken der Temperatur durch eine Zufuhr von Behandlungsmedium in die mindestens eine Behandlungszone erfolgt.

6. Das Verfahren nach einem der Ansprüche 1 bis 5, wobei ein Absenken einer Temperatur in mindestens einer Behandlungszone, die von der Behälterbehandlungsmaschine umfasst wird, basierend auf der effektiven Geschwindigkeit (5, 9, 13, 17, 21) erfolgt.

7. Das Verfahren nach einem der Ansprüche 2 bis 6, wobei beim getakteten Betreiben des Transportbands (23) mit der Nenngeschwindigkeit (v_Nenn) für die erste minimale Zeitdauer und mit Stoppen des Transportbands (23) für die zweite minimale Zeitdauer, wenn die erste minimale Zeitdauer und die zweite minimale Zeitdauer gleich lang sind, eine effektive Geschwindigkeit (10) von 50% der Nenngeschwindigkeit erreicht wird.

8. Das Verfahren nach einem der Ansprüche 2 bis 6, wobei beim getakteten Betreiben des Transportbands (23) mit der Nenngeschwindigkeit (v_Nenn) für die erste minimale Zeitdauer und mit Stoppen des Transportbands (23) für die zweite minimale Zeitdauer, wenn die erste minimale Zeitdauer viermal so lang wie die zweite minimale Zeitdauer ist, eine effektive Geschwindigkeit von 75% der Nenngeschwindigkeit erreicht wird.

9. Vorrichtung zum Ausführen des Verfahrens nach einem der Ansprüche 1 bis 8, wobei die Vorrichtung eine Behälterbehandlungsmaschine (24) mit einem Transportband (23) umfasst.

10. Die Vorrichtung nach Anspruch 9, wobei das Transportband (23) regelbar ist, um getaktet mit einer Nenngeschwindigkeit (v_Nenn) für eine erste Zeitdauer (3, 7, 11, 16, 20) und mit Stoppen des Transportbands (23) für eine zweite Zeitdauer (4, 8, 12, 15, 19) betrieben zu werden.

11. Die Vorrichtung nach Anspruch 9 oder 10, wobei die Behälterbehandlungsmaschine (24) mindestens eine Behandlungszone umfasst, deren Temperatur regelbar ist.

12. Die Vorrichtung nach Anspruch 11, wobei die mindestens eine Behandlungszone eine Zuführleitung für eine Zufuhr von Behandlungsmedium umfasst.
